# EUROPEAN PATENT APPLICATION

(11) **EP 1 624 406 A1**
(43) Date of publication of application: **08.02.2006**
(21) Application number: 05011527.8
(22) Date of filing: 27.05.2005
(51) Int. Cl.: G06Q 10/00

(54) **System for providing a specific recipe satisfying a specific customer preference and related method**

(30) Priority: 04.08.2004 CN 200410588984
(71) Applicant: Hsu, Che-Chen, Sindian City, Taipei County 231 (TW)
(72) Inventor: Hsu, Che-Chen, Sindian City, Taipei County 231 (TW)
(74) Representative: Eder, Christian

(57) **Abstract**

A system for providing a specific recipe, its related method, and a personal storage medium for recording specific customer preference data. The system includes a reading device and a displaying device. The reading device is used for reading customer preference data. The displaying device is used for displaying the customer preference data to produce the specific recipe according to the customer preference data.

## Description

### BACKGROUND OF THE INVENTION

### 1. Field of the Invention

The present invention relates to a system for providing a specific recipe, its related method, and a personal storage medium for recording specific customer preference data. More particularly, the present invention discloses a system and related method that provides a specific recipe satisfying specific personal flavor preferences of the customer, and a personal storage medium for recording the specific customer preference data.

### 2. Description of the Related Art

Generally, restaurants, coffee shops, bars, fast food restaurants, ice cream shops and the like only provide "standard" foods, such as coffee, ice cream, cocktails, hamburgers, sandwiches, toast, pizza, etc., but are unable to customize food for different customers. However, customers have their own flavor preferences; for example, some people like coffee with crushed ice, but others prefer coffee without ice; some people prefer their toast dark, but others like their toast light. For these special customers, it is not easy to find food to their satisfaction.

Of course, if the customer becomes a regular customer, the shop can remember his or her personal preferences; otherwise the customer always needs to explain his or her personal preferences. Furthermore, when shops offer "customized" food, it can be difficult for them to calculate the price.

Therefore, it is desirable to provide a system for providing a specific recipe satisfying a specific customer preference, and related method, to mitigate and/or obviate the aforementioned problems.

### SUMMARY OF THE INVENTION

A main objective of the present invention is to provide a system for providing a specific recipe that satisfies a specific customer personal preference, which includes a reading device and a displaying device. The reading device is used for reading customer preference data. The displaying device is used for displaying the customer preference data to produce the specific recipe according to the customer preference data.

In an embodiment of the present invention, the specific recipe is coffee, ice cream, a cocktail, a hamburger, a sandwich, toast, or pizza.

In an embodiment of the present invention, the customer preference data comprises at least two ingredients of the specific recipe satisfying a specific customer preference; amounts for the at least two ingredients; and a production method for the specific recipe satisfying the specific customer preference.

In an embodiment of the present invention, the system of the present invention further comprises a calculating device for calculating a price according to the ingredients, amounts and production method of the specific recipe satisfying the specific customer preference.

In an embodiment of the present invention, the customer preference data is stored in a personal storage medium (which is a smart card, an IC card or a stored-value card) or a database.

Moreover, the present invention also provides a method for providing a specific recipe satisfying a specific customer preference, the method comprising: obtaining customer preference data; recording the customer preference data; displaying the customer preference data; and producing the specific recipe according to the customer preference data.

In an embodiment of the present invention, the method of the present invention further comprises: obtaining primary ingredient data for the specific recipe; obtaining amount data for the primary ingredient data; obtaining production method data for the specific recipe; and providing a preference menu for the specific customer.

In an embodiment of the present invention, the preference menu comprises: a plurality of options for the primary ingredients for the specific recipe; a plurality of options for amounts for the primary ingredients; and a plurality of options for the production method for the specific recipe.

In an embodiment of the present invention, the method further comprises: calculating a price according to the ingredients, amounts and production method of the specific recipe satisfying the specific customer preference.

Furthermore, the present invention uses a personal storage medium such as a smart card, an IC card, a stored-value card or a PDA mobile phone to store the customer preference data.

Other objects, advantages, and novel features of the invention will become more apparent from the following detailed description when taken in conjunction with the accompanying drawings.

### BRIEF DESCRIPTION OF THE DRAWINGS

FIG 1 is a system structure drawing of an embodiment according to the present invention.
FIG 2 is a schematic drawing of a system for reading customer preference data from a database according to the present invention.
FIG 3 is a schematic drawing of a system for reading customer preference data from a personal storage medium according to the present invention.
FIG 4 is a schematic drawing of the customer preference data according to the present invention.
FIG 5 is a schematic drawing of making Bloody Marys 50A and 50B respectively satisfying customer A and customer B personal preferences.
FIG 6 is a flowchart of an embodiment according to the present invention.
FIG 7 is a flowchart for a step shown in FIG 6.
FIG 8 shows a preference menu of an embodiment according to the present invention.

### DETAILED DESCRIPTION OF THE PREFERRED EMBODIMENT

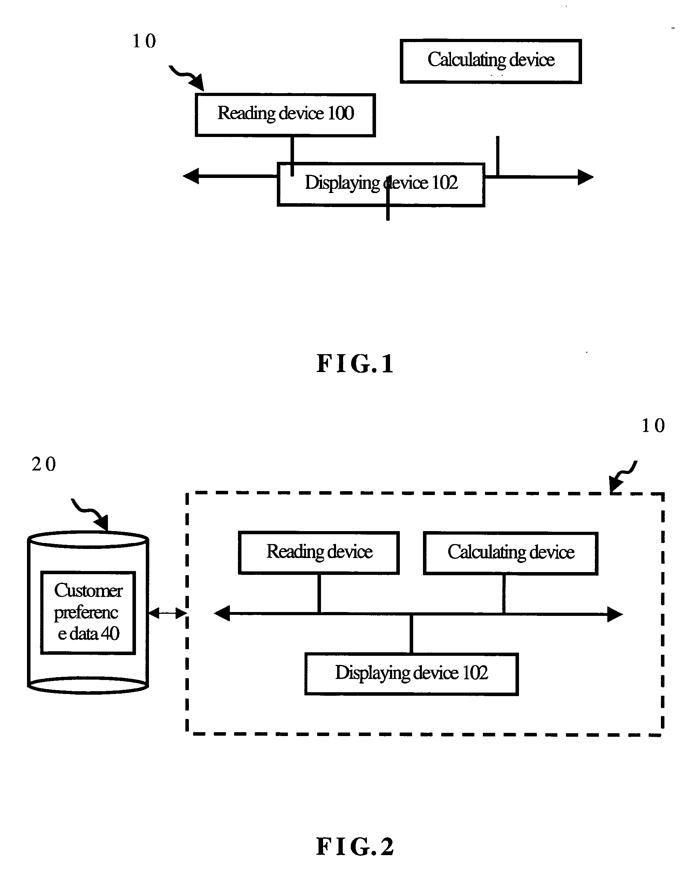

Please refer to FIG 1. FIG 1 is a system structure drawing of an embodiment according to the present invention. In the embodiment, a system 10 for providing a specific recipe comprises a reading device 100, a displaying device 102, and a calculating device 104. The reading device 100, the displaying device 102, and the calculating device 104 are all electrically connected to each other, and by using this structure the present invention can quickly provide the specific recipe that satisfies a specific customer personal preference.

In the present invention, recipe indicates food composed of at least two ingredients, especially food that can be quickly made when knowing the amounts of the ingredients and production methods. For example, cocktails are one of the recipes of the present invention, which are made of "alcohol" and "beverages"; the present invention may also be used for other recipe types, such as coffee, ice cream, hamburgers, sandwiches, toast or pizza.

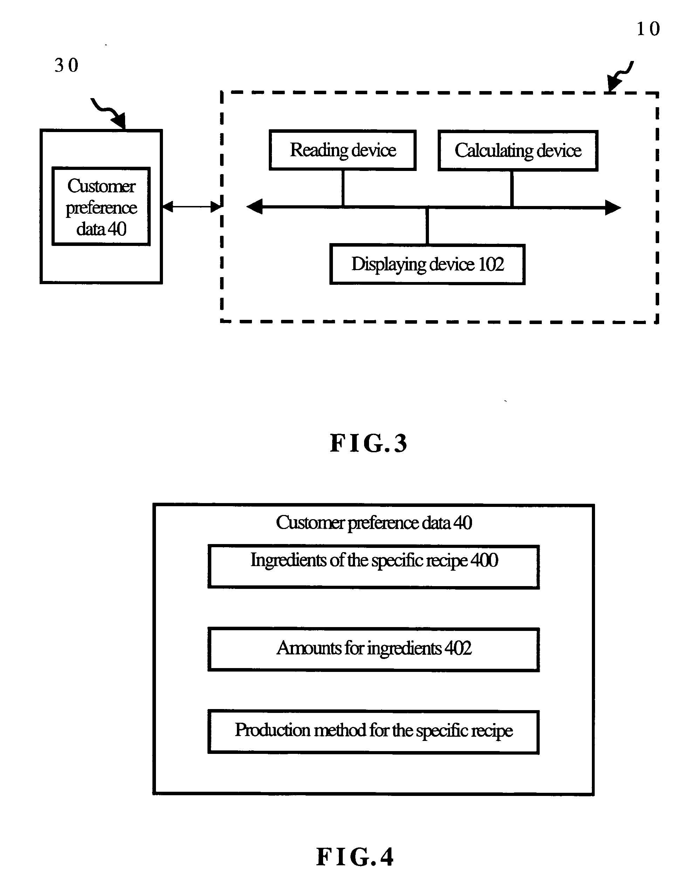

Please refer to FIG 2 to FIG 4. FIG 2 is a schematic drawing of a system for reading customer personal preference data from a database according to the present invention. FIG 3 is a schematic drawing of the system for reading customer personal preference data from a personal storage medium according to the present invention. FIG 4 is a schematic drawing of customer personal preference data according to the present invention.

As shown in FIG 2, the system 10 of the present invention is electrically connected to a database 20, and the database 20 has customer preference data 40 as shown in FIG 4. Alternatively, as shown in FIG 3, the system 10 is electrically connected to a personal storage medium 30, and the personal storage medium 30 has the customer preference data 40 as shown in FIG 4. The personal storage medium 30 may be a smart card, an IC card or a stored-value card.

As shown in FIG 2 and FIG 3, in an embodiment, the reading device 100 reads the customer preference data 40, the displaying device 102 displays the customer preference data 40 for a subsequent production process, and the calculating device 104 calculates a price according to the customer preference data 40.

As shown in FIG 4, the customer preference data 40 has: at least two ingredients 400 of the specific recipe, amounts 402 for the at least two ingredients, and a production method 404 for the specific recipe.

The system 10 of the present invention can be used for restaurants, coffee shops, bars, fast food restaurants, ice cream shops, etc., and can be used to provide coffee, ice cream, cocktails, hamburgers, sandwiches, toast, pizza, etc. In this manner, shops can always make food for customers according to the customer preference data 40.

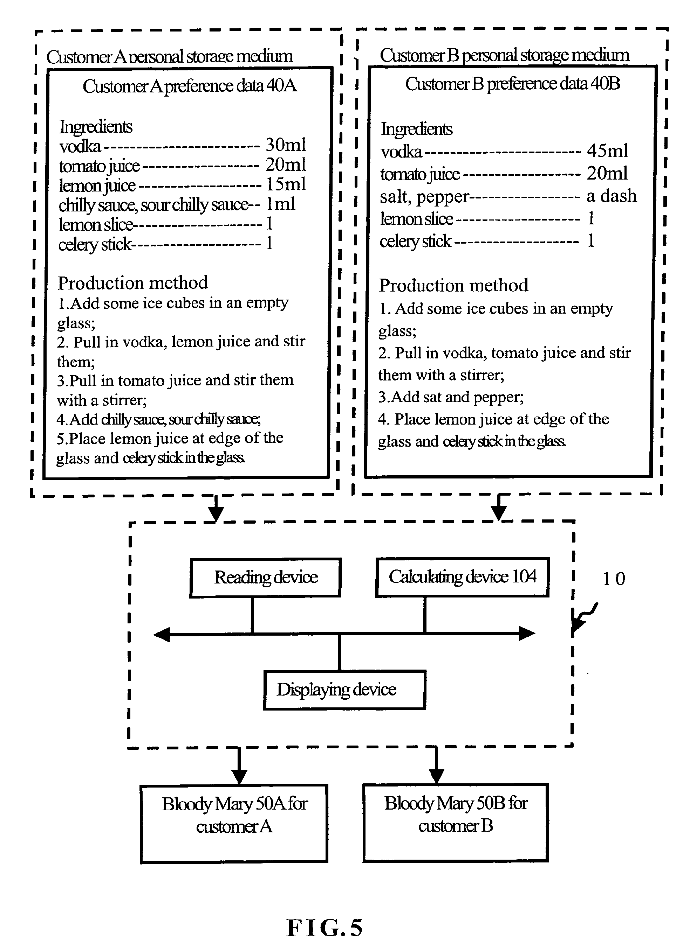

Please refer to FIG 5. FIG 5 is a schematic drawing of making Bloody Marys 50A and 50B that respectively satisfies customer A and customer B personal preferences according to customer preference data 40A for customer A and customer preference data 40B for customer B.

As shown in FIG 5, customer A wants 15ml of lemon juice added to his or her Bloody Mary, 1ml of chilly sauce, and sour chilly sauce, in addition to vodka and tomato juice; customer B wants his or her Bloody Mary with a little pepper and salt. Usually, a restaurant or bar only provides a "standard" cocktail, but not a "customized" cocktail for different customers. Customer A and customer B will have to spend a lot of time to explain their personal preferences so that the restaurant or bar can make their particular cocktails. Additionally, even if the restaurant or bar can make the cocktails according to customer A's request and customer B's request, it is still a problem to calculate the price.

The system 10 of the present invention can solve the above-mentioned problem. As shown in FIG 5, the customer preference data 40A for customer A, and the customer preference data 40B for customer B, are separately stored in personal storage media 30A and 30B (such as a smart card, an IC card or a stored-value card); the reading device 100 reads the customer preference data 40A and 40B from the personal storage media 30A and 30B, the displaying device 102 displays the customer preference data 40A and 40B for reference when making Bloody Mary 50A for customer A and Bloody Mary 50B for customer B according to the customer preference data 40A and 40B, and the calculating device 104 calculates a price according to the ingredients, amounts and production method for the Bloody Marys 50A and 50B.

Therefore, customer A and customer B only need to input their requests once, and the system 10 can help to make the same "customized" cocktail every time. Similarly, the system 10 can be used for making coffee, ice cream, cocktails, hamburgers, sandwiches, toast, pizza, etc., or other recipes.

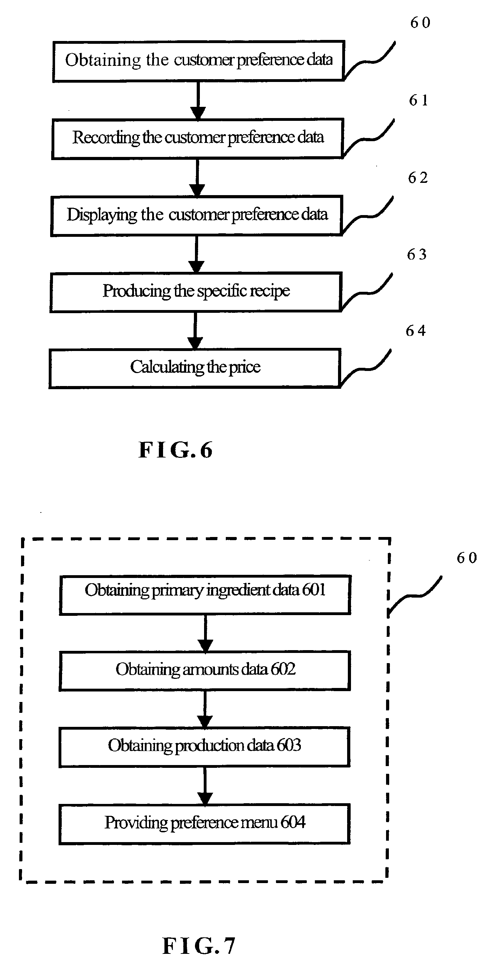

Please refer to FIG 6. FIG 6 is a flowchart of an embodiment according to the present invention. First, in step 60, the customer preference data 40 shown in FIG 4 is provided for the system 10. In step 61, the system 10 records the customer preference data 40 in the database 20 shown in FIG 2 or in the personal storage medium 30 (such as a smart card, an IC card, a stored-value card, or a mobile phone) shown in FIG 3. When a customer wants food according to his or her personal preference, the system 10 performs step 62 to display the customer preference data 40 stored in the database 20 or in the personal storage medium 30; and in step 63, customized food or drink can be made according to the customer preference data 40. Finally, the system 10 performs step 64 to calculate a price according to the ingredients, amounts and production method of the specific recipe.

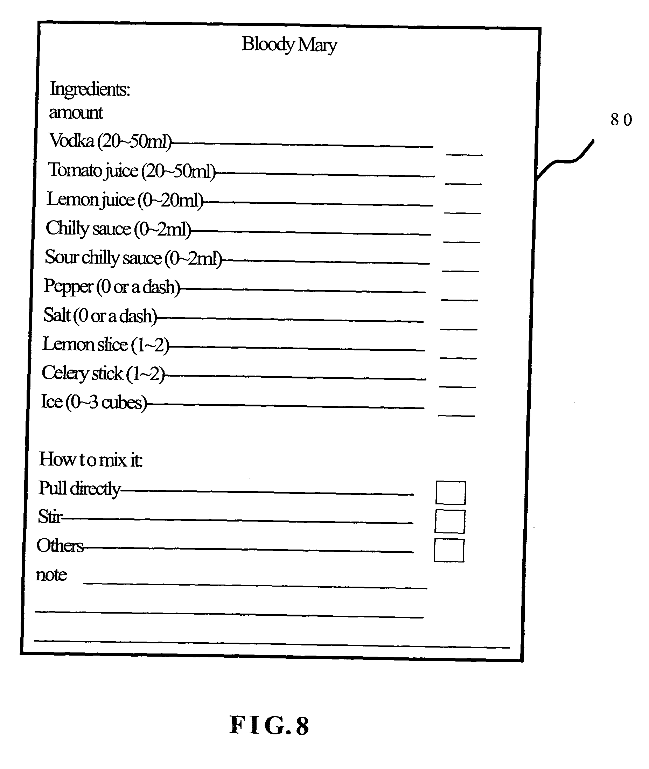

In an embodiment, the customer preference data 40 obtained in step 60 can be obtained by providing samples for the customer, and then recording different customer preference data or by the customer voluntarily providing the data 40. Alternatively, as shown in FIG 7, the customer preference data 40 obtained in step 60 can be replaced by the following steps:
Step 601: obtaining the primary ingredients data for the recipe. For example, the primary ingredients of the above-mentioned Bloody Mary are: vodka, tomato juice, lemon juice, chilly sauce, sour chilly sauce, pepper, salt, a lemon slice, a celery stick, and ice.
Step 602: obtaining amount data for the primary ingredients. For example, the amount data for the primary ingredients of the above-mentioned Bloody Mary are: vodka: 20∼50ml, tomato juice: 20~50ml, lemon juice: 0~20ml, chilly sauce: 0~2ml, sour chilly sauce: 0∼2ml, pepper: 0 or a dash, salt: 0 or a dash, lemon slices: 1~2; celery sticks: 1~2, and ice: 0-3 cubes.
Step 603: obtaining production method data. For example, the production method data for the primary ingredients of the above-mentioned Bloody Mary is: direct pouring or stirring.
Step 604: providing a customer preference menu 80 as shown in FIG 8, which provides a plurality of options for the primary ingredients of the specific recipe, amounts for the primary ingredients and production method data for the customer to obtain the customer preference data 40.

Although the present invention has been explained in relation to its preferred embodiment, it is to be understood that many other possible modifications and variations can be made without departing from the spirit and scope of the invention as hereinafter claimed.

## Claims

1. A system for providing a specific recipe satisfying a specific customer personal preference, the specific recipe comprising a plurality of ingredients, the system comprising:
a reading device for reading customer preference data, the customer preference data comprising:
at least two ingredients of the specific recipe satisfying a specific customer preference; and
amounts for the at least two ingredients;
a displaying device electrically connected to the reading device for displaying the customer preference data to produce the specific recipe according to the customer preference data.

2. The system as claimed in claim 1, wherein the customer preference data is stored in a personal storage medium or a database, and the customer preference data further comprises:
a production method for the specific recipe satisfying the specific customer preference.

3. The system as claimed in claim 2 further comprising a calculating device for calculating a price according to the ingredients, amounts and production method of the specific recipe satisfying the specific customer preference.

4. The systems as claimed in claim 3, wherein the specific recipe is coffee, ice cream, a cocktail, a hamburger, a sandwich, toast, or pizza, and the personal storage medium is a smart card, an IC card or a stored-value card.

5. A method for providing a specific recipe satisfying a specific customer preference, the specific recipe comprising a plurality of ingredients, the method comprising:
obtaining customer preference data, the customer preference data comprising:
at least two ingredients of the specific recipe satisfying a specific customer preference; and
amounts for the at least two ingredients;
recording the customer preference data; and
producing the specific recipe according to the customer preference data.

6. The method as claimed in claim 5, further comprising:
obtaining primary ingredient data for the specific recipe, the primary ingredient data comprising data of a plurality of primary ingredients;
obtaining amount data for the primary ingredients; and
obtaining primary production method data for the specific recipe.

7. The method as claimed in claim 6 further comprising:
providing a preference menu for the specific customer, the preference menu comprising:
a plurality of options for the primary ingredients for the specific recipe;
a plurality of options for amounts for the primary ingredients; and
a plurality of options for the primary production method for the specific recipe.

8. The method as claimed in claim 7 further comprising:
displaying the customer preference data; and
calculating a price according to the ingredients, amounts and production method of the specific recipe satisfying the specific customer preference.

9. A machine readable personal storage medium comprising customer preference data for a specific recipe satisfying a specific customer preference to produce the specific recipe according to the customer preference data, the specific recipe composed of a plurality of ingredients, the customer preference data comprising:
at least two ingredients of the specific recipe satisfying a specific customer preference; and
amounts for the at least two ingredients.

10. The machine readable personal storage medium as claimed in claim 9, wherein the machine readable personal storage medium is a smart card, an IC card, a stored-value card, a PDA or a mobile phone.
